# EUROPÄISCHE PATENTSCHRIFT

(11) **EP 2 966 431 B1**
(45) Veröffentlichungstag und Bekanntmachung des Hinweises auf die Patenterteilung: **09.08.2017**
(21) Anmeldenummer: 15172448.1
(22) Anmeldetag: 16.06.2015
(51) Int. Cl.: G01M 15/02

(54) **ADAPTER ZUR BEFESTIGUNG EINES TURBOLADERS AN EINEM PRUEFSTAND, ROHRSTUTZEN FÜR EINEN PRÜFSTAND UND PRUEFSTAND**
ADAPTER FOR ATTACHING A TURBOCHARGER ON A TEST BENCH, PIPE SOCKET FOR A TEST BENCH AND TEST BENCH
ADAPTATEUR DESTINE A FIXER UNE TURBOSOUFFLANTE SUR UN BANC D'ESSAI, TUBULURES POUR UN BANC D'ESSAI ET BANC D'ESSAI

(30) Priorität: 09.07.2014 DE 202014005586 U
(43) Veröffentlichungstag der Anmeldung: 13.01.2016
(73) Patentinhaber: VISCOM Automotive GmbH, 76726 Germersheim (DE)
(72) Erfinder: Friedt, Jacek, 76726 Germersheim (DE)
(74) Vertreter: Stütz, Jan

(56) Entgegenhaltungen:
- WO-A1-99/63318
- DE-A1-102011 010 357

## Beschreibung

Die vorliegende Erfindung betrifft einen Adapter zur Befestigung eines Turboladers an einem Prüfstand, insbesondere an einem Strömungsprüfstand. Die Erfindung betrifft auch einen Rohrstutzen für einen Prüfstand. Die Erfindung betrifft ferner einen Prüfstand, insbesondere einen Strömungsprüfstand zur Prüfung der Einstellung einer variablen Turbinengeometrie eines Turboladers.

### Stand der Technik

Turbolader dienen der Leistungssteigerung von Verbrennungsmotoren und kommen bei Diesel-Motoren ebenso wie bei Otto-Motoren zum Einsatz. Zur Überprüfung eines Turboladers im Rahmen von Wartungsarbeiten sind spezielle Prüfstände bekannt.

Ein solcher, durch Benutzung bekannter Prüfstand, umfasst einen Rohrstutzen, an welchen eine Komponente des zu prüfenden Turboladers, beispielsweise ein Turbinenaustrittsflansch, angeschlossen wird. Die Verbindung zwischen dem Turbinenaustrittsflansch des Turboladers und dem Rohrstutzen des Prüfstands muss dabei mechanisch stabil sein, damit der Turbolader während der Prüfung sich nicht von dem Prüfstand lösen kann. Ferner muss die Verbindung zwischen dem Turbinenaustrittsflansch des Turboladers und dem Rohrstutzen des Prüfstands auch luftdicht sein, damit während einer Prüfung keine Luft an der Verbindungsstelle entweicht oder angesaugt wird.
Die Verbindung zwischen dem Turbinenaustrittsflansch des Turboladers und dem Rohrstutzen des Prüfstands wird bei bekannten Prüfständen beispielsweise durch Verschrauben oder Klemmen hergestellt. Das Herstellen der Verbindung erfordert daher eine verhältnismäßig große Zeitdauer. Das Lösen der Verbindung nach erfolgter Prüfung erfordert ebenfalls eine verhältnismäßig große Zeitdauer. Ein typischer Adapterflansch ist aus DE102011010357 A1 bekannt.

### Aufgabe

Aufgabe der Erfindung ist es, die erforderliche Zeitdauer zum Herstellen sowie zum Lösen einer Verbindung zwischen einem Turbolader und einem Prüfstand zu verringern.

### Lösung

Diese Aufgabe wird erfindungsgemäß durch einen Adapter zur Befestigung eines Turboladers an einem Prüfstand mit den Merkmalen des Anspruchs 1 gelöst.
Vorteilhafte Ausgestaltungen und Weiterbildungen der Erfindung sind Gegenstand der Unteransprüche.
Ein erfindungsgemäßer Adapter zur Befestigung eines Turboladers an einem Prüfstand weist mindestens einen Haltemagnet auf, welcher geeignet ist, den Turbolader an dem Adapter festzuhalten.

Der Turbolader kann somit einfach, beispielsweise mit seinem Turbinenaustrittsflansch, auf den Adapter aufgesetzt werden und wird von diesem automatisch festgehalten. Zusätzliche Hilfsmittel zur Befestigung, wie beispielsweise Schrauben oder Klemmen, sind nicht erforderlich. Die erforderliche Zeitdauer zum Herstellen sowie zum Lösen einer Verbindung zwischen dem Turbolader und dem Prüfstand ist damit vorteilhaft verringert.

Gemäß einer vorteilhaften Ausgestaltung der Erfindung ist der Haltemagnet als Permanentmagnet, insbesondere als Neodym-Magnet, ausgebildet.

Gemäß einer alternativen Ausgestaltung der Erfindung ist der Haltemagnet als Elektromagnet ausgebildet.

Vorzugsweise ist der Haltemagnet zylinderförmig, insbesondere kreiszylinderförmig, ausgebildet. Dabei sind vorzugsweise mehrere Haltemagnete auf einer Kreisbahn in einen vorzugsweise annähernd hohlzylindrisch ausgestalteten Grundkörper des Adapters integriert. Dazu weist der Grundkörper des Adapters Bohrungen auf, in welche die Haltemagnete eingepresst sind.

Alternativ ist der Haltemagnet ringförmig ausgebildet. Dadurch ist der Haltemagnet passend in einen vorzugsweise annähernd hohlzylindrisch ausgestalteten Grundkörper des Adapters integrierbar. Beispielsweise ist der Haltemagnet hohlzylindrisch ausgebildet und weist einen rechteckigen Querschnitt oder die Form eines Torus auf.

Vorteilhaft weist der Adapter eine Dichtung auf, welche zwischen dem Adapter und einem an dem Adapter befestigten Turbolader abdichtet.

Zur Befestigung des Adapters an einem Gewinde eines Rohrstutzens des Prüfstands weist der Adapter vorteilhaft ein Schraubgewinde auf, welches vorzugsweise als Innengewinde ausgeführt ist.

Die Aufgabe wird auch durch einen Prüfstand, insbesondere einen Strömungsprüfstand, zur Prüfung der Einstellung einer variablen Turbinengeometrie eines Turboladers mit den Merkmalen des Anspruchs 11 gelöst, welcher mindestens einen erfindungsgemäßen Adapter umfasst.

Gemäß einer vorteilhaften Ausgestaltung der Erfindung ist der Adapter dabei mittels einer Schraubverbindung an einem Rohrstutzen des Prüfstands befestigt. Dadurch ist der Adapter verhältnismäßig einfach an dem Rohrstutzen zu befestigen.

Gemäß einer alternativen Ausgestaltung der Erfindung ist der Adapter mittels einer Magnetverbindung an einem Rohrstutzen des Prüfstands befestigt. Auch dadurch ist der Adapter verhältnismäßig einfach an dem Rohrstutzen zu befestigen.

Vorteilhaft umfasst der Prüfstand einen Rohrstutzen, welcher einen Befestigungsmagnet zum Halten des Adapters umfasst. Der Befestigungsmagnet kann dabei als Permanentmagnet, insbesondere als Neodym-Magnet, oder als Elektromagnet ausgebildet sein.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt.
Es zeigen:

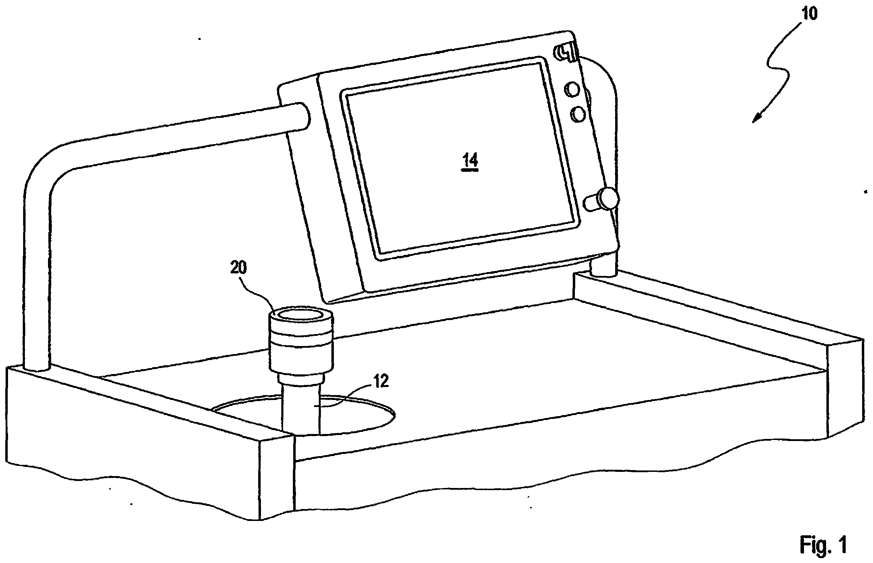

- Fig. 1:: einen Prüfstand zur Prüfung eines Turboladers,
- Fig. 2:: den Prüfstand aus Fig. 1 mit einem zu prüfenden Turbolader,

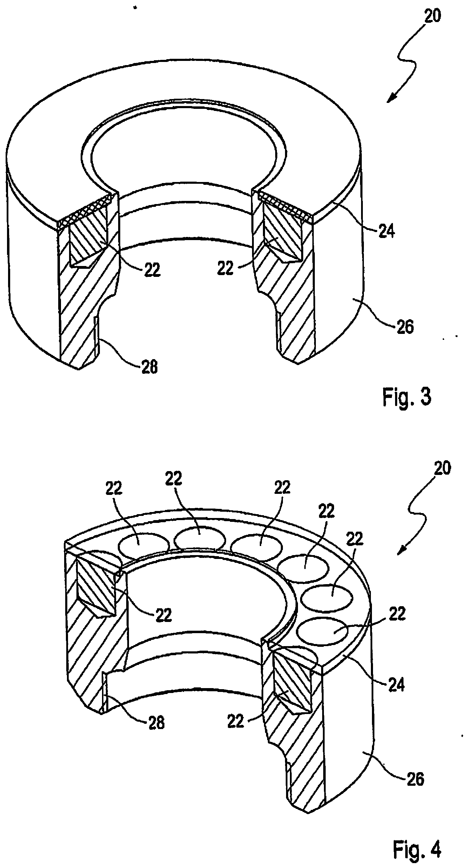

- Fig. 3:: eine perspektivische Schnittdarstellung eines Adapters zur Befestigung des Turboladers an dem Prüfstand und
- Fig. 4:: eine teilweise transparente perspektivische Schnittdarstellung des Adapters aus Fig. 3.

Ein Prüfstand 10 zur Prüfung eines Turboladers 100, vorliegend ein Strömungsprüfstand, umfasst eine Bedieneinheit 14 zur Eingabe und Ausgabe von Daten. Ferner umfasst der Prüfstand 10 einen Rohrstutzen 12, an dessen Ende ein Adapter 20 angebracht ist.

Vorliegend umfasst der Rohrstutzen 12 ein Außengewinde, und der Adapter 20 umfasst ein Innengewinde 28. Der Adapter 20 ist dabei mit dem Innenengwinde 28 auf das Außengewinde des Rohrstutzens 12 aufgeschraubt und auf diese Art an dem Rohrstutzen 12 mittels einer Schraubverbindung befestigt.

Der Adapter 20 umfasst einen annähernd hohlzylindrisch ausgestalteten Grundkörper 26. Der Grundkörper 26 besteht dabei vorwiegend aus Kunststoff. Auf einer ersten Stirnseite des Grundkörpers 26 ist eine Dichtung 24 aufgelegt, welche kreisringförmig ausgebildet ist. Die Dichtung 24 ist vorzugsweise aus einem magnetischen, gummiartigen Kunststoff hergestellt und weist magnetische Anziehungskraft auf.

An der Innenwand es Grundkörpers 26, nahe einer zweiten Stirnseite, welche der ersten Stirnseite gegenüberliegt, ist das Innengewinde 28 eingebracht. Das Innengewinde 28 dient dazu, den Adapter 20 an dem Außengewinde des Rohrstutzens 12 des Prüfstands 10 festzuschrauben.

Der Adapter 20 umfasst mehrere Haltemagnete 22, welche zum Festhalten des zu prüfenden Turboladers 100 dienen. Die Haltemagnete 22 sind vorliegend kreiszylindrisch ausgebildet. Die Haltemagnete 22 sind in den Grundkörper 26 des Adapters 20 integriert. Dabei sind die Haltemagnete 22 auf einer Kreisbahn in den hohlzylindrisch ausgestalteten Grundkörper 26 des Adapters 20 integriert. Der Grundkörper 26 des Adapters 20 weist entsprechende Bohrungen auf, in welche die Haltemagnete 22 eingepresst sind. Die Haltemagnete 22 sind dabei nahe der ersten Stirnseite des Grundkörpers 26 angeordnet.

Die Haltemagnete 22 können auch durch einen Steg von der ersten Stirnseite des Grundkörpers 26 und von der Dichtung 24 getrennt sein. Die Haltemagnete 22 sind somit zwischen der Dichtung 24 und dem Innengewinde 28 innerhalb des Grundkörpers 26 des Adapters 20 angeordnet.

Vorliegend sind die Haltemagnete 22 als Permanentmagnete ausgebildet, insbesondere als Neodym-Magnete. Es ist auch denkbar, die Haltemagnete 22 als Elektromagnete auszubilden.

Ferner ist es denkbar, nur einen Haltemagnet vorzusehen, welcher ringförmig ausgebildet ist und sich annähernd über den gesamten Querschnitt des Adapters 20 erstreckt. Dabei kann der Haltemagnet hohlzylindrisch ausgebildet sein und einen rechteckigen Querschnitt oder auch beispielsweise die Form eines Torus aufweisen.

Der zu prüfende Turbolader 100 umfasst eine in einem Turbinengehäuse 110 angeordnete variable Turbinengeometrie, eine Turbine und einen in einem Verdichtergehäuse 120 angeordneten Verdichter. Die Turbine und der Verdichter sind mittels einer nicht dargestellten Welle miteinander verbunden.

Das Verdichtergehäuse 120 ist annähernd kreiszylindrisch ausgestaltet. Das Verdichtergehäuse 120 umfasst einen Verdichtereintrittsflansch 122 und einen Verdichteraustrittsflansch 121. Der Verdichteraustrittsflansch 121 ist mit einem Rohrstück verbunden, welches annähernd tangential von dem Verdichtergehäuse 120 weg ragt. Der Verdichtereintrittsflansch 122 verläuft parallel zu einer Stirnseite des Verdichtergehäuses 120.

Das Turbinengehäuse 110 ist annähernd kreiszylindrisch ausgestaltet. Das Turbinengehäuse 110 umfasst einen Turbineneintrittsflansch 112 und einen Turbinenaustrittsflansch 111. Der Turbineneintrittsflansch 112 ist mit einem Rohrstück verbunden, welches annähernd tangential von dem Turbinengehäuse 110 weg ragt. Der Turbinenaustrittsflansch 111 verläuft parallel zu einer Stirnseite des Turbinengehäuses 110.

Das Turbinengehäuse 110 und das Verdichtergehäuse 120 sind in Axialrichtung nebeneinander angeordnet. Der Turbinenaustrittsflansch und der Verdichtereintrittsflansch 122 befinden sich dabei an den voneinander abgewandten Stirnflächen des Turbinengehäuses 110 und des Verdichtergehäuses 120.

Im Betrieb des Turboladers 100 mit einem Verbrennungsmotor strömt Abgas aus dem Verbrennungsmotor durch den Turbineneintrittsflansch in das Turbinengehäuse 110 hinein, weiter durch die variable Turbinengeometrie und treibt dadurch die Turbine an. Anschließend strömt das Abgas durch den Turbinenaustrittsflansch 111 aus dem Turbinengehäuse 110 aus.

Die Turbine treibt dabei über die Welle den Verdichter an. Der Verdichter saugt somit im Betrieb des Turboladers 100 Luft an, welche durch den Verdichtereintrittsflansch 122 in das Verdichtergehäuse 120 eintritt. Die angesaugte Luft wird dabei komprimiert und strömt durch den Verdichteraustrittsflansch 121 zu dem Verbrennungsmotor.

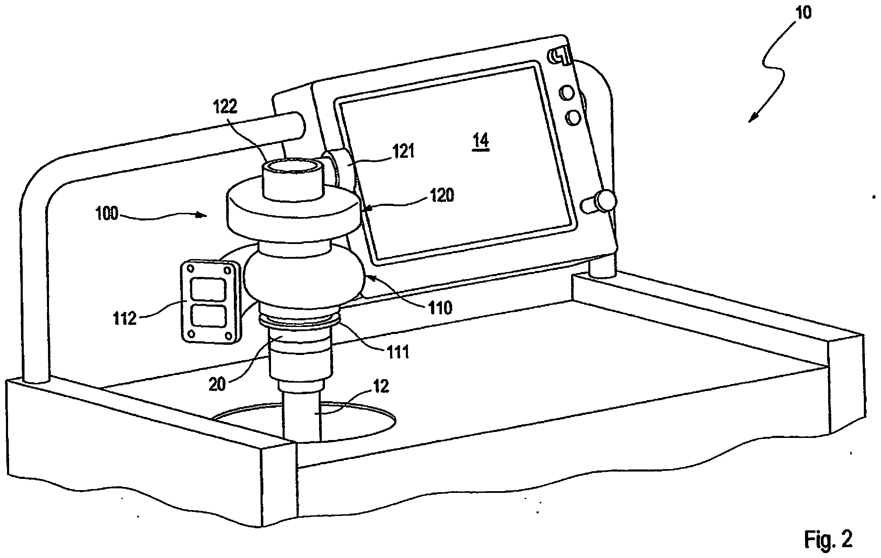

Zur Prüfung des Turboladers 100 wird dieser an den Prüfstand 10 angeschlossen, wie in Fig. 2 dargestellt ist. Dabei wird der Turbinenaustrittsflansch 111 des Turboladers 100 auf die erste Stirnseite des Adapters 20, welche von dem Rohrstutzen 12 weg weist, aufgesetzt. Der Turbolader 100, insbesondere der Turbinenaustrittsflansch 111, besteht vorwiegend aus einem magnetischen Material, beispielsweise Eisen.

Die Haltemagnete 22 ziehen dabei den Turbinenaustrittsflansch 111 des Turboladers 100 an und halten dadurch den Turbolader 100 auf der ersten Stirnfläche des Adapters 20 fest. Die Dichtung 24, welche auf der ersten Stirnfläche des Adapters 20 aufliegt, dichtet dabei zwischen dem Turbinenaustrittsflansch 111 des Turboladers 100 und dem Adapter 20 luftdicht ab.

Vorliegend ist der Adapter 20 mit dem Innenengwinde 28 auf das Außengewinde des Rohrstutzens 12 aufgeschraubt. Auch andere Möglichkeiten zur Befestigung des Adapters 20 an dem Rohrstutzen 12 anstelle einer Schraubverbindung sind denkbar. Insbesondere ist eine Magnetverbindung zwischen dem Adapter 20 und dem Rohrstutzen 12 denkbar.

Beispielsweise kann der Rohrstutzen 12 einen Befestigungsmagnet enthalten. In diesem Fall ziehen sich die Haltemagnete 22 des Adapters 20 und der Befestigungsmagnet des Rohrstutzens 12 gegenseitig an, und der Adapter 20 wird an dem Rohrstutzen 12 gehalten.

Wenn der Grundkörper 26 des Adapters 20 zumindest teilweise aus einem magnetischen Material besteht, so zieht der Befestigungsmagnet des Rohrstutzens 12 ebenfalls den Adapter 20 an, und der Adapter 20 wird durch die Anziehungskraft des Befestigungsmagneten an dem Rohrstutzen 12 gehalten.

Auch kann der Adapter 20 zusätzlich einen Befestigungsmagnet enthalten. Wenn der Rohrstutzen 12, zumindest teilweise, aus einem magnetischen Material besteht, so wird auch in diesem Fall der Adapter 20 durch die Anziehungskraft des Befestigungsmagneten an dem Rohrstutzen 12 gehalten.

Alternativ können die Haltemagnete 22 derart stark ausgebildet sein, dass die Haltemagnete 22 einerseits den Turbolader 100 und zusätzlich den Rohrstutzen 12 anziehen, wodurch der Adapter 20 an dem Rohrstutzen 12 gehalten wird.

### BEZUGSZEICHENLISTE:

- 10 -: Prüfstand
- 12 -: Rohrstutzen
- 14 -: Bedieneinheit
- 20 -: Adapter
- 22 -: Haltemagnet
- 24 -: Dichtung
- 26 -: Grundkörper
- 28 -: Innengewinde
- 100 -: Turbolader
- 110 -: Turbinengehäuse
- 111 -: Turbinenaustrittsflansch
- 112 -: Turbineneintrittsflansch
- 120 -: Verdichtergehäuse
- 121 -: Verdichteraustrittsflansch
- 122 -: Verdichtereintrittsflansch

## Patentansprüche

1. Adapter (20) zum Herstellen sowie zum Lösen einer gasleitenden Verbindung zwischen einem Turbolader (100) und einem Prüfstand (10), wobei der Adapter (20) mindestens einen Haltemagnet (22) aufweist, welcher geeignet ist, einen Turbinenaustrittsflansch des Turboladers(100) gasleitend an dem Adapter (20) festzuhalten.

2. Adapter (20) nach Anspruch 1, **dadurch gekennzeichnet, dass** der Haltemagnet (22) als Permanentmagnet ausgebildet ist.

3. Adapter (20) nach Anspruch 1, **dadurch gekennzeichnet, dass** der Haltemagnet (22) als Elektromagnet ausgebildet ist.

4. Adapter (20) nach einem der vorstehenden Ansprüche, **dadurch gekennzeichnet, dass** der Haltemagnet (22) zylinderförmig ausgebildet ist.

5. Adapter (20) nach einem der Ansprüche 1 bis 3, **dadurch gekennzeichnet, dass** der Haltemagnet (22) ringförmig ausgebildet ist.

6. Adapter (20) nach einem der Vorstehenden Ansprüche, **dadurch gekennzeichnet, dass** der Adapter (20) eine Dichtung (24) aufweist, welche zwischen dem Adapter (20) und einem an dem Adapter (20) befestigten Turbolader (100) abdichtet.

7. Adapter (20) nach einem der vorstehenden Ansprüche, **dadurch gekennzeichnet, dass** der Adapter (20) ein Schraubgewinde (28) zur Befestigung des Adapters (20) an einem Gewinde eines Rohrstutzens (12) aufweist.

8. Prüfstand (10) zur Prüfung eines Turboladers (100), insbesondere Strömungsprüfstand zur Prüfung der Einstellung einer variablen Turbinengeometrie, umfassend mindestens einen Adapter (20) nach einem der Ansprüche 1 bis 7.

9. Prüfstand (10) nach Anspruch 8, **dadurch gekennzeichnet, dass** der Adapter (20) mittels einer Schraubverbindung an einem Rohrstutzen (12) des Prüfstands (10) befestigt ist.

10. Prüfstand (10) nach Anspruch 8, **dadurch gekennzeichnet, dass** der Adapter (20) mittels einer Magnetverbindung an einem Rohrstutzen (12) des Prüfstands (10) befestigt ist.

11. Prüfstand (10) nach Anspruch 8, umfassend einen Rohstutzen (12) mit einem Befestigungsmagnet zum Halten eines Adapters (20).

12. Prüfstand (10) nach Anspruch 11 **dadurch gekennzeichnet, dass** der Befestigungsmagnet als Permanentmagnet ausgebildet ist.

13. Prüfstand (10) nach Anspruch 11 **dadurch gekennzeichnet, dass** der Befestigungsmagnet als Elektromagnet ausgebildet ist.

## Claims

1. Adapter (20) for connecting and disconnecting a gas-conducting linkage between a turbocharger (100) and a test bench (10), wherein the adapter (20) has at least one holding magnet (22), which is adapted to gas-conductingly hold a turbine exhaust flange of the turbocharger (100) to the adapter (20).

2. Adapter (20) according to claim 1, **characterized in that** the holding magnet (22) is a permanent magnet.

3. Adapter (20) according to claim 1, **characterized in that** the holding magnet (22) is an electromagnet.

4. Adapter (20) according to any one of the preceding claims, **characterized in that** the holding magnet (22) is cylindrical.

5. Adapter (20) according to one of the claims 1 to 3, **characterized in that** the holding magnet (22) is annular.

6. Adapter (20) according to one of the preceding claims, **characterized in that** the adapter (20) has a seal (24) which is adapted to seal between the adapter (20) and a turbocharger (100), fixed to the adapter (20).

7. Adapter (20) according to any one of the preceding claims, **characterized in that** the adapter (20) comprises a screw thread (28) for fastening the adapter (20) to a thread of a pipe socket (12).

8. Test bench (10) for testing a turbocharger (100), in particular a flow analysis test bench for testing the settings of a variable turbine geometry comprising at least one adapter (20) according to one of the claims 1 to 7.

9. Test bench (10) according to claim 8, **characterized in that** the adapter (20) is connected by means of a screw connection to a pipe socket (12) of the test bench (10).

10. Test bench (10) according to claim 8, **characterized in that** the adapter (20) is connected by means of a magnetic connection to a pipe socket (12) of the test bench (10).

11. Test bench (10) according to claim 8, comprising a pipe socket (12) having a fastening magnet for holding an adapter (20).

12. Test bench (10) according to claim 11, **characterized in that** the fastening magnet is designed as permanent magnet.

13. Test bench (10) according to claim 11, **characterized in that** the fastening magnet is an electromagnet.

## Revendications

1. Adaptateur (20) pour établir ainsi que pour détacher une jonction conductrice de gaz entre un turbocompresseur (100) et un banc d'essai (10), cependant que l'adaptateur (20) présente au moins un aimant de retenue (22) qui est approprié pour retenir une bride de sortie de turbine du turbocompresseur (100) avec une conduction de gaz sur l'adaptateur (20).

2. Adaptateur (20) selon la revendication 1, **caractérisé en ce que** l'aimant de retenue (22) est configuré comme un aimant permanent.

3. Adaptateur (20) selon la revendication 1, **caractérisé en ce que** l'aimant de retenue (22) est configuré comme un électroaimant.

4. Adaptateur (20) selon l'une des revendications précédentes, **caractérisé en ce que** l'aimant de retenue (22) est configuré cylindrique.

5. Adaptateur (20) selon l'une des revendications 1 à 3, **caractérisé en ce que** l'aimant de retenue (22) est configuré annulaire.

6. Adaptateur (20) selon l'une des revendications précédentes, **caractérisé en ce que** l'adaptateur (20) présente une étanchéité (24) qui réalise une étanchéité entre l'adaptateur (20) et un turbocompresseur (100) fixé à l'adaptateur (20).

7. Adaptateur (20) selon l'une des revendications précédentes, **caractérisé en ce que** l'adaptateur (20) présente un pas de vis (28) pour la fixation de l'adaptateur (20) à un filet d'une tubulure (12).

8. Banc d'essai (10) pour tester un turbocompresseur (100), en particulier banc d'essai d'écoulement pour tester le réglage d'une géométrie variable de turbine, qui comprend au moins un adaptateur (20) selon l'une des revendications 1 à 7.

9. Banc d'essai (10) selon la revendication 8, **caractérisé en ce que** l'adaptateur (20) est fixé à une tubulure (12) du banc d'essai (10) au moyen d'un raccord vissé.

10. Banc d'essai (10) selon la revendication 8, **caractérisé en ce que** l'adaptateur (20) est fixé à une tubulure (12) du banc d'essai (10) au moyen d'un raccord magnétique.

11. Banc d'essai (10) selon la revendication 8 comprenant une tubulure (12) avec un aimant de fixation pour retenir un adaptateur (20).

12. Banc d'essai (10) selon la revendication 11, **caractérisé en ce que** l'aimant de fixation est configuré comme un aimant permanent.

13. Banc d'essai (10) selon la revendication 11, **caractérisé en ce que** l'aimant de fixation est configuré comme un électroaimant.
